# DEMANDE DE BREVET EUROPEEN

(11) **EP 2 172 865 A1**
(43) Date de publication de la demande: **07.04.2010**
(21) Numéro de dépôt: 08305611.9
(22) Date de dépôt: 29.09.2008
(51) Int. Cl.: G06F 21/04, G06F 21/20

(54) **Procédé de sécurisation de la saisie d'un secret au travers d'un clavier virtuel**

(71) Demandeur: GEMPLUS, 13420 Gémenos (FR)
(72) Inventeur: BÜCHNER, Matthias, 13600, LA CIOTAT (FR)

(57) **Abrégé**

La présente invention propose un procédé de sécurisation de la saisie d'un code secret au travers d'un clavier virtuel. Cette sécurisation se fait en insérant un module de sécurisation permettant de remplacer l'affichage du pointeur destiné à la saisie du code secret, par un nouveau pointeur, dit pointeur sécurisé, et dont le comportement obéit à l'application de règles comportementales.

## Description

L'invention concerne un procédé destiné à sécuriser la saisie d'un secret au moyen d'un clavier virtuel.

L'invention porte plus particulièrement sur un procédé permettant de protéger une saisie d'un secret contre tout ou partie des éventuelles tentatives d'espionnages (aussi appelées attaques).

La croissance exponentielle des transactions électroniques dans notre société rend l'authentification des utilisateurs de plus en plus critiques.

Il est communément admis que l'authentification d'une personne peut se faire, de manière optimisée, en utilisant trois critères distincts :
- Amener la preuve de quelque chose que 1 on possède. Cet axiome est parfaitement illustré par le symbole de la clef. En effet, le fait de posséder la clef d'un lieu, ou d'un objet est un critère fort d'authentification en tant que résident, ou propriétaire. De la même façon les papiers d'identité basent leur authentification sur ce même paramètre.
- Amener la preuve de ce que l'on est. Nous sommes typiquement en face d'une authentification biométrique. En effet une personne va prouver son identité en faisant reconnaitre des particularités physiques ou comportementales. C'est ce mode d'authentification qui est utilisé par tout un chacun pour « reconnaitre » des gens dans la rue ou sur le lieu de travail, la personne compare l'apparence visuelle de son interlocuteur avec l'image gardée en mémoire lors de leur dernière rencontre et fait ou non le rapprochement.

Ce mode d'authentification se combine au précédent dans le cas de certains papiers d'identité qui embarquent une photographie. L'identité de la personne est prouvée par sa possession d'un tel document ainsi que sa ressemblance avec la photographie.

Amener la preuve que l'on sait quelque chose. Ce troisième et dernier paramètre de l'authentification est employé depuis très longtemps, par exemple au travers des mots de passe qui protégeaient certaines corporations ou certaines guildes dans les temps anciens. Plus récemment les codes de cartes de crédit ou les combinaisons de coffres forts identifient leurs possesseurs ou en tout cas les personnes ayant droit d'usage.

Si l'authentification la plus sure est sans aucun doute celle qui se base sur une astucieuse combinaison de ces 3 paramètres, il faut reconnaitre que la biométrie est, a ce jour un paramètre lourd et difficile a mettre en oeuvre dans un contexte électronique. Ainsi, dans les moyens électroniques ou informatiques récents, l'authentification est, le plus souvent, basée sur les deux paramètres qui sont « ce que vous possédez » et « ce que vous savez ». L'illustration la plus flagrante étant les cartes électroniques, par exemple de crédit ou d'identité électronique. Dans ces modèles, l'usager va présenter le dispositif en sa possession, par exemple la carte ou tout autre dispositif électronique, ainsi que un secret qu'il est sensé être le seul a connaitre.

Le problème se pose à cet instant précis, à savoir la saisie du secret.

Certains modèles, le plus souvent dits « propriétaires », appuient leur terminal de saisie du secret sur une électronique verrouillée, blindées et le plus souvent physiquement inaccessibles. C'est par exemple le cas de certains distributeurs de billets qui ont de claviers blindés, et une électronique protégée en touts points. Ces modèles protègent ainsi l'organe de saisie du secret.

Mais les schémas émergeants tendent, au contraire, a s'appuyer sur une électronique plus simple, plus courante, et donc plus accessible. C'est typiquement le cas des authentifications par internet, par exemple destinée à réaliser des achats en ligne, ou des authentifications d'identité, qui peuvent se faire à partir de tout terminal fournissant un accès à la toile.

Dans ces cas là, l'organe de saisie du secret, se fait le plus souvent au travers d'un affichage sur l'écran, et via l'usage d'un dispositif de pointage, généralement une souris électronique. Le dispositif électronique auquel l'organe de saisie est relié va pouvoir analyser le secret, ou tout au moins le traiter en tout ou partie, est un ordinateur. De nombreux logiciels malicieux peuvent être installés sur ledit ordinateur à l'insu de son propriétaire, et sont généralement destinés à espionner la saisie d'un éventuel secret, et à le transmettre à un attaquant tiers.

Ces logiciels vont généralement enregistrer tout ou partie des événements d'entrée qui surviennent, et les enregistrer dans une mémoire. Pour les logiciels enregistrant les frappes des touches du clavier, nous parleront de key-Loggers, pour ceux enregistrant des événements lies à la souris électronique, que se soit mouvements ou clics, nous parlerons de Mouse-Loggers, pour les logiciels enregistrant tout ou partie de l'écran d'affichage, nous parlerons de screen-logger.

Dans le présent document nous ferons la distinction entre le pointeur, qui est l'objet graphique présent généralement sur un écran, et qui indique à l'utilisateur une zone particulière. De manière commune, ce pointeur est piloté par un dispositif de pointage.

Le dispositif de pointage est un dispositif électronique qui permet généralement à l'utilisateur de diriger un pointeur à l'écran. Une souris d'ordinateur, un trackball, un joystick, un ensemble de touches directionnelles sont des exemples de dispositifs de pointage.

Le « clic » désigne un événement particulier lié au dispositif de pointage, le plus souvent au travers d'un bouton, et qui permet à 1 utilisateur de déclencher un évènement, généralement à l'endroit où se situe le pointeur. Couramment les clics sont utilisés pour activer un bouton, sélectionner une zone, ou encore faire apparaitre un objet graphique.

Le plus souvent, les logiciels malicieux embarqueront plusieurs de fonctionnalités. Par exemple, un enregistrement des mouvements de la souris, associé à la capture d'une portion d'écran autour du pointeur lors de événement « click ». Dans la suite du présent document nous ferons le raccourci d'appeler screen-logger de tels logiciels malicieux complexes et évolués.

La présente invention se propose de sécuriser la saisie d'un secret sur un écran virtuel, via un dispositif de pointage contre l'usage de logiciels aptes à analyser et réagir en fonction des mouvements dudit dispositif de pointage.

Afin de résoudre cette problématique, la présente invention a tout d'abord pour objet un procédé de sécurisation de la saisie d'un secret au travers d'un clavier virtuel, relié à un dispositif électronique comportant au moins un micro-processeur, une mémoire de travail, une interface de communication bidirectionnelle avec ledit clavier virtuel, et un dispositif de pointage associé audit dispositif électronique. Les données de positionnement fournies par le dispositif de pointage au dispositif électronique étant dissociées de la représentation visuelle du pointeur sur le clavier virtuel.

Le comportement de la représentation visuelle du pointeur sur le clavier virtuel peut se faire en appliquant au moins une règle dite règle comportementale aux données de positionnement fournies par le dispositif de pointage au dispositif électronique.

La au moins une règle comportementale peut être enregistrée dans une mémoire du dispositif électronique.

Si cette mémoire est non volatile, le procédé peut comporter en outre une étape de mise à jour de la au moins une règle comportementale.

Si cette mémoire est volatile, le procédé peut comporter en outre une étape de téléchargement de la au moins une règle comportementale depuis un dispositif électronique distant.

Selon un mode de réalisation, le clavier virtuel est représenté sur un moniteur, relié au dispositif électronique

Selon un mode de réalisation le dispositif de pointage est une souris d'ordinateur

la présente invention a également pour objet un élément logiciel dit module de sécurisation, ayant accès aux données du système d'exploitation concernant les informations reçues d'un dispositif de pointage, ayant accès au périphérique d'affichage, et ayant accès à une zone de mémoire, cet élément logiciel est apte à
- effacer la représentation graphique du pointeur système
- lire dans la zone de mémoire au moins une règle comportementale
- générer sur le dispositif d'affichage, en fonction des valeurs des données du système d'exploitation concernant les informations reçues d'un dispositif de pointage, ainsi que de la au moins une règle comportementale, la représentation graphique d'un pointeur dit pointeur sécurisé.

Selon un mode de réalisation, l'élément logiciel peut être apte à télécharger la au moins une règle comportementale depuis un ordinateur distant, et la mémoriser dans une zone mémoire.

Selon un mode de réalisation, l'élément logiciel peut être apte à générer de faux évènements en lieu et place du dispositif de pointage. Dans ce mode de réalisation l'élément logiciel peut être apte à annuler les faux évènements avant que ceux-ci soient interprétés par le clavier virtuel. Cette annulation peut se faire par exemple en interceptant les faux évènements avant leur réception par ledit clavier virtuel, ou par exemple en communiquant les faux évènements audit clavier virtuel.

D'autres caractéristiques et avantages de l'invention ressortiront clairement de la description qui en est faite ci-après, à titre indicatif et nullement limitatif, en référence aux dessins annexés dans lesquels :
- La figure 1 représente un exemple de fonctionnement de screen-logger
- La figure 2 représente un exemple de comportement du pointeur pouvant fournir de l'information à un éventuel attaquant, et basé sur les trajectoires du pointeur.
- La figure 3 représente un autre exemple de comportement du pointeur pouvant fournir de l'information à un éventuel attaquant, et basé également sur les trajectoires du pointeur.
- La figure 4 représente un exemple de comportement du pointeur pouvant fournir de l'information à un éventuel attaquant, et basé sur la vitesse de déplacement du pointeur.
- La figure 5 une implémentation fonctionnelle de l'invention dans un dispositif électronique.

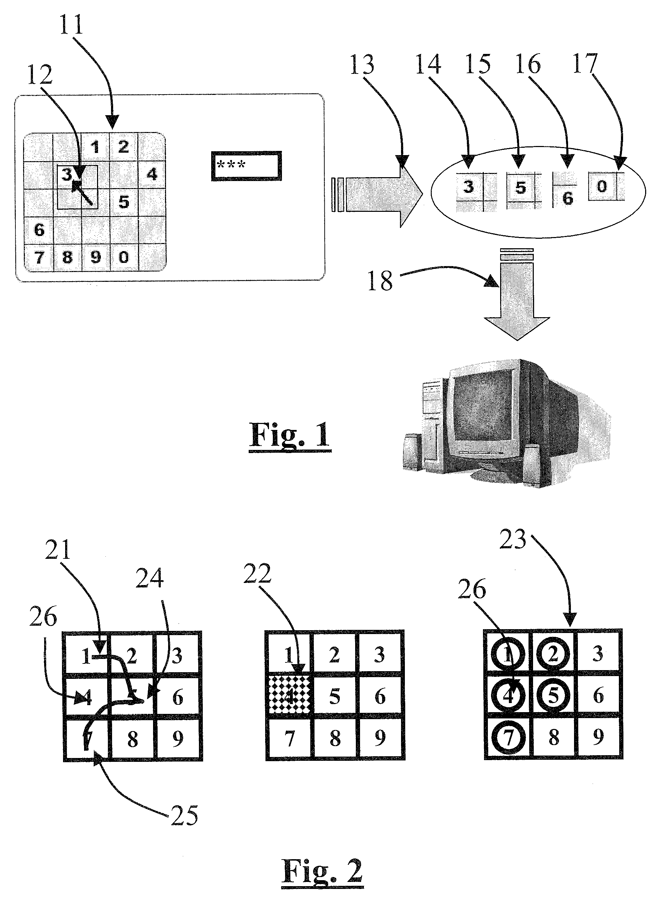

Dans la figure 1, on peu voir un cran virtuel de saisie 11 lié à une application bancaire internet. Afin de saisir son code secret d'authentification, l'utilisateur doit cliquer sur les chiffres correspondant.

Hors, dans l'exemple de la figure 1, il est à noter que l'ordinateur dont l'utilisateur se sert contient un screen-logger évolué, à savoir qu'il est paramétré pour, lors d'un événement clic du pointeur 12, capturer une image de quatre centimètres carrés de l'écran, autour du pointeur.

Donc toujours dans l'illustration de la figure 1, l'utilisateur saisi son code secret au travers du clavier virtuel 11, et le screen-logger va capturer 13 quatre petites images illustrées en 14, 15, 16 et 17. Ces images vont être transmises 18 à l'individu malveillant qui a installé le screen-logger par un moyen quelconque de communication, ici par exemple au travers d'un envoi de courrier électronique. Le code secret 4 5 6 7 est ainsi capturé et transmis à cet individu.

Afin de rendre inefficaces cette catégorie de logiciels malicieux basées sur l'analyse totale ou partielle du comportement du pointeur, la présente invention propose de dissocier les informations visibles par l'utilisateur au travers d'un pointeur que nous appellerons pointeur sécurisé, et le comportement du pointeur traditionnel, que nous appellerons pointeur système. Cette distinction se fait grâce à l'utilisation d'un module logiciel appelé module de sécurisation, qui va être capable d'analyser les comportements du pointeur système, le plus souvent en lisant les valeurs de registres systèmes qui généralement contiennent les informations transmises par le dispositif de pointage. Le module de sécurisation accède également à des règles comportementales qu'il appliquera pour générer le pointeur sécurisé et ses comportements.

Un exemple de telle règle comportementale peut être : traduire un déplacement vers la droite du dispositif de pointage par un déplacement identique du pointeur sécurisé vers la gauche. Ainsi le pointeur système se déplacera vers la droite, mais le pointeur sécurisé se déplacera, lui, vers la gauche.

La figure 2 illustre un autre mode de capture d'information par un screen-logger. En effet cette version de logiciel malicieux se propose de détecter les mouvements 21 du pointeur, et d'appliquer un ensemble de règles basées sur 3 axiomes :
- Inconsciemment l'utilisateur va cliquer au centre d'une zone graphique qu'il souhaite valider, ainsi les zones qu'il survole en passant par leur centre 26 sont très probablement des zones qu'il souhaite sélectionner.
- si la linéarité de la trajectoire du pointeur est brisée, alors cela signifie que l'utilisateur a trouvé la zone qu'il cherchait et qu'il est parti vers une nouvelle cible. Une brisure de la linéarité se traduisant par un angle aigue comme l'angle 24.
- si le pointeur arrête sa course, c'est que l'utilisateur a trouvé la zone qu'il cherchait, comme illustré en 25.

L'application de ces trois axiomes à la trajectoire 11 mémorisée par le screen-logger permet aisément d'obtenir le code secret suivant : 1 4 5 7.

Dans le cas de la figure 2, une implémentation de l'invention consiste en la mise en place d'un module de sécurisation qui va effacer la représentation du pointeur système, et générer un pointeur sécurisé auquel est associé au moins une règle comportementale qui spécifie que le pointeur sécurisé a une unité de déplacement équivalent à une zone graphique. Ainsi il n'est plus possible d'analyser le comportement du pointeur à 1 intérieur d'une zone, et ainsi d'observer des brisures de trajectoires ou encore un survol de la zone centrée ou non.

Le dessin 22 de la figure 2 représente une telle implémentation selon laquelle le pointeur est étendu à la totalité de la surface d'une zone.

Le dessin 23 de la figure 2 représente une implémentation équivalente dans laquelle le pointeur sécurisé ne peut se déplacer que de un des points 26 à un autre des points 26.

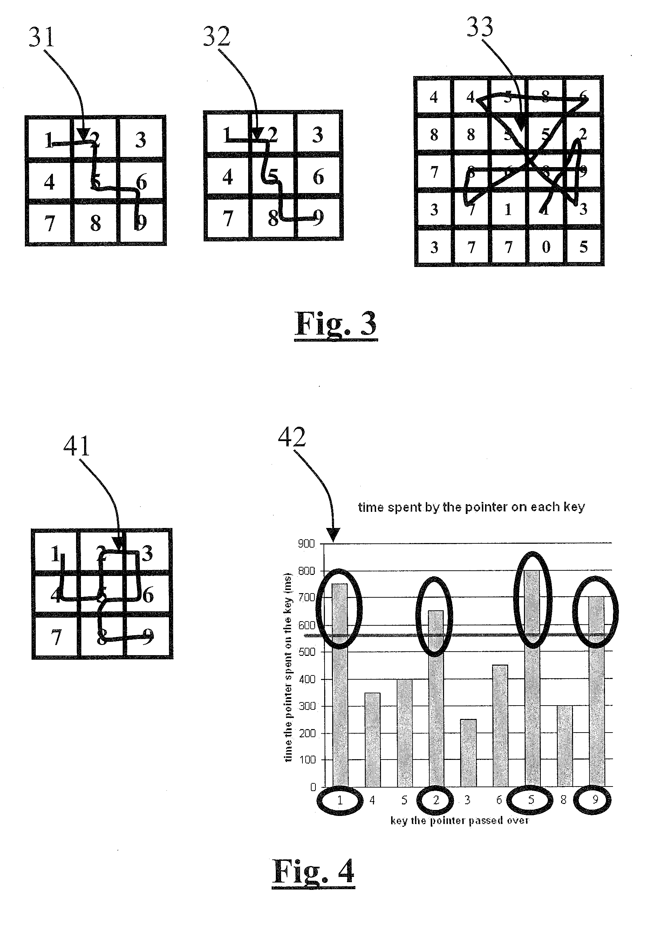

La figure 3 illustre le fonctionnement d'un screen-logger qui baserait son analyse sur le fait que statistiquement, un utilisateur, lors de la saisie de son code secret sur un clavier virtuel, déplace le pointeur selon le chemin le plus court d'une zone graphique qu'il souhaite valider, a une autre.

Ainsi, l'analyse conjointe des déplacements 31 et 32 du pointeur nous indique que :
- lors du déplacement 31 le pointeur a survolé les zones graphiques correspondant aux chiffres : 1-2-5-6-9
- lors du déplacement 32 le pointeur a survolé les zones graphiques correspondant aux chiffres : 1-2-5-8-9

L'attaquant, ou le screen logger lui-même peut aisément conclure que le code secret saisi est le 1-2-5-9. Une implémentation de l'invention dans ce contexte consiste en la mise en place d'un module de sécurisation qui va effacer la représentation du pointeur système, et générer un pointeur sécurisé auquel est associé au moins une règle comportementale dont le but est de générer des déplacements supplémentaires 33 du pointeur système. Selon un mode préféré de réalisation de l'invention, cette règle comportementale ne répercutera pas les déplacements additionnels sur la représentation graphique du pointeur sécurisé.

La figure 4 illustre le fonctionnement d'un screen-logger qui se focaliserait sur une analyse temporelle du comportement du pointeur système. En effet, des analyses statistiques montrent que l'utilisateur passe plus de temps sur les zones graphiques qu'il souhaite valider que sur celles qu'il survole uniquement lors d'un déplacement. Le temps nécessaire au clic est très probablement à l'origine de ce phénomène.

La représentation 31 du clavier montre une trajectoire capturée par un screen-logger, et le graphique 42 illustre l'analyse temporelle associée au comportement 41.

Les 4 zones graphiques sur lesquelles le pointeur a passé le plus de temps donnent le code secret probablement saisi, en l'occurrence 1-2-5-9.

Une implémentation de l'invention dans ce contexte consiste en la mise en place d'un module de sécurisation qui va effacer la représentation du pointeur système, et générer un pointeur sécurisé auquel est associé au moins une règle comportementale dont le but est de lisser au maximum les temps de survol des zones de la trajectoire. Une règle comportementale peut par exemple proposer l'application de coefficients multiplicateurs aux ordres donnés par l'utilisateur au travers de son dispositif de pointage.

Ainsi, si l'utilisateur souhaite survoler rapidement une zone, le module de sécurisation appliquera un coefficient multiplicateur inferieur à « un » au déplacement visuel du pointeur sécurisé, obligeant l'utilisateur à amplifier les mouvements du dispositif dépointage afin d'obtenir le déplacement souhaité. De façon équivalente, une seconde règle comportementale peut par exemple proposer de déplacer le pointeur sécurisé hors de sa zone actuelle s'il y est présent depuis un temps supérieur à un seuil donné.

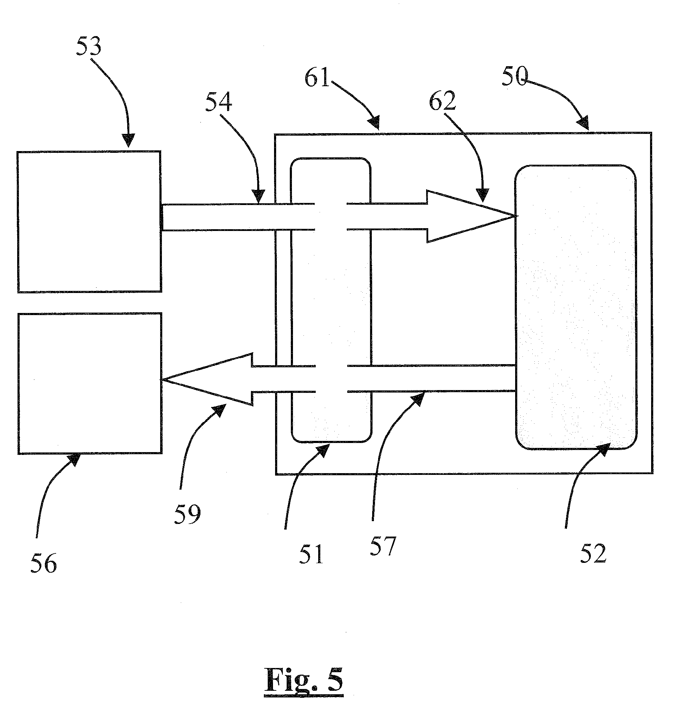

Dans l'exemple d'implémentation de l'invention illustrée dans la figure 5, le dispositif électronique 50 contient une application d'authentification 52.

Cette application d'authentification fonctionne en affichant un clavier virtuel sur un dispositif d'affichage 56, par exemple un moniteur d'ordinateur, et recevant les informations de saisies 54 d'un dispositif de pointage 53, par exemple une souris d'ordinateur.

Les informations envoyées par le dispositif de pointage (déplacement, clics ...) sont reçus 54 par le système d'exploitation du dispositif électronique 50, et sont ensuite relayées 62 vers l'application d'authentification 52.

L'interprétation de ces événements est faite par l'application 52.

Afin de sécuriser la saisie des informations, le module de sécurisation 51 selon l'invention se positionne entre l'application et les dispositifs d'entrées et de sorties 53 et 56.

Ainsi, le module de sécurisation 51 peut empêcher l'affichage 57 du pointeur système, et générer 59 un pointeur sécurisé.

Lors de la réception 54 des informations du dispositif de pointage 53, le module de sécurisation pourra par exemple corriger les modifications générées lors de l'affichage 59 du pointeur sécurisé, et ainsi fournir 62 à l'application 52 des informations parfaitement cohérentes.

Dans ce cas particulier d'implémentation, l'insertion du module de sécurisation se fait de manière parfaitement transparente pour l'application 52.

Selon un mode particulier d'implémentation de l'invention, une règle comportementale peut dissocier la représentation graphique du pointeur dit pointeur sécurisé, et les données du système d'exploitation concernant les informations reçues d'un dispositif de pointage en envoyant au système d'exploitation des informations en lieu et place du dispositif de pointage.

En effet, il est tout à fait envisageable que le module de sécurisation, en interprétant une telle règle, communique avec le système d'exploitation sur le même canal de communication que le dispositif de pointage.

Ainsi le module de sécurisation aura la possibilité de générer des événements virtuels sur ce canal, et lui seul sera en mesure de distinguer ces évènements, de ceux générés effectivement par le dispositif de pointage.

Par exemple la module de sécurisation peut utiliser une règle comportementale qui déclenche l'envoie d'un faux mouvement sur le canal de communication du dispositif de pointage.

Ce mouvement va être pris en compte par le système d'exploitation qui va mettre ses données à jour.

Un faux évènement "généré" est alors visible par l'ensemble du système. Un screen-logger peut donc prendre en compte ce faux évènement.

Le module de sécurisation va conserver en mémoire le déplacement qu'il a généré, et ainsi va pouvoir conserver un affichage cohérent avec les mouvements réels du dispositif de pointage, alors que les données du système d'exploitation seront étonnées.

Il est tout à fait possible, selon ce mode de réalisation que une règle comportementale génère également des évènements tels que des clics ou des mouvements de l'éventuelle molette du dispositif de pointage.

Dans ce cas particulier de réalisation, le module de sécurisation doit être en mesure d'annuler les évènements qu'il a généré, avant leur interprétation par le clavier virtuel. Une solution peut consister en l'interception de ces évènements lors de leur transmission du système d'exploitation vers le clavier virtuel, une autre peut consister en une communication de ces évènements au clavier virtuel afin que celui-ci ne les interprète pas lorsque le système d'exploitation les lui communiquera.

## Revendications

1. Procédé de sécurisation de la saisie d'un secret au travers d'un clavier virtuel (1), relié à un dispositif électronique comportant au moins un micro-processeur, une mémoire de travail, une interface de communication bidirectionnelle avec ledit clavier virtuel, et un dispositif de pointage associé audit dispositif électronique et audit clavier virtuel, **caractérisé en ce que** les données de positionnement fournies par ledit dispositif de pointage audit dispositif électronique sont dissociées de la représentation visuelle du pointeur sur ledit clavier virtuel.

2. Procédé selon la revendication 1 **caractérisé en ce que** le comportement de ladite représentation visuelle dudit pointeur sur ledit clavier virtuel se fait en appliquant au moins un règle dite règle comportementale aux dites données de positionnement fournies par ledit dispositif de pointage audit dispositif électronique

3. Procédé selon la revendication 2 **caractérisé en ce que** ladite au moins une règle comportementale est enregistrée dans une mémoire dudit dispositif électronique

4. Procédé selon la revendication 3 **caractérisé en ce que** ladite mémoire est une mémoire non volatile

5. Procédé selon la revendication 4 **caractérisé en ce qu'**il comporte en outre une étape de mise à jour de ladite au moins une règle comportementale

6. Procédé selon la revendication 3 **caractérisé en ce que** ladite mémoire est une mémoire volatile

7. Procédé selon la revendication 6 **caractérisé en ce qu'**il comporte en outre une étape de téléchargement de ladite au moins une règle comportementale depuis un dispositif électronique distant

8. Procédé selon l'une des revendications 1 à 7,
**caractérisé en ce que** le clavier virtuel est représenté sur un moniteur, relié audit dispositif électronique

9. Procédé selon l'une quelconque des revendications précédentes, **caractérisé en ce que** le dispositif de pointage est une souris d'ordinateur

10. Elément logiciel dit module de sécurisation d'un clavier virtuel, ayant accès aux données du système d'exploitation concernant les informations reçues d'un dispositif de pointage, ayant accès au périphérique d'affichage, et ayant accès à une zone de mémoire, **caractérisé en ce qu'**il est apte à
- effacer la représentation graphique du pointeur système
- lire dans ladite zone de mémoire au moins une règle comportementale
- générer sur ledit dispositif d'affichage, en fonction des valeurs des dites données du système d'exploitation concernant les informations reçues d'un dispositif de pointage, ainsi que de ladite au moins une règle comportementale, la représentation graphique d'un pointeur dit pointeur sécurisé.

11. Elément logiciel selon la revendication 6 **caractérisé en ce qu'**il est apte à télécharger ladite au moins une règle comportementale depuis un ordinateur distant, et la mémoriser dans une zone mémoire.

12. Elément logiciel selon la revendication 11
**caractérisé en ce qu'**il est apte à générer de faux évènements en lieu et place du dispositif de pointage

13. Elément logiciel selon la revendication 12
**caractérisé en ce qu'**il est apte à annuler lesdits faux évènements avant que ceux-ci soient interprétés par ledit clavier virtuel

14. Elément logiciel selon la revendication 13
**caractérisé en ce que** ladite annulation desdits faux évènements se fait en les interceptant avant leur réception par ledit clavier virtuel

15. Elément logiciel selon la revendication 13
**caractérisé en ce que** ladite annulation desdits faux évènements se fait en communiquant lesdits faux évènements audit clavier virtuel
